Europäisches Patentamt

European Patent Office

Office européen des brevets

(19)

(11) Publication number: **0 206 391**
**A2**

# (12) EUROPEAN PATENT APPLICATION

(21) Application number: 86200947.9

(22) Date of filing: 29.05.86

(51) Int. Cl.4: **H04M 1/274**

(30) Priority: 30.05.85 US 739219
29.07.85 US 759906

(43) Date of publication of application:
30.12.86 Bulletin 86/52

(84) Designated Contracting States:
DE FR GB IT NL

(71) Applicant: **Automatic Dialer Partners Ltd. 1983
c/o Dasa Corporation General Partner
91 Montvale Avenue
Stoneham Massachusetts 02180(US)**

(72) Inventor: **Brisk, Richard A.
27 Sedgemeadow Road
Wayland Massachusetts 01778(US)**
Inventor: **Kasindorf, Barry
8 Maymont Drive
Framingham Massachusetts 01701(US)**
Inventor: **Sherrill, William W.
91 Montvale Avenue
Stoneham Massachusetts 02180(US)**

(74) Representative: **Smulders, Theodorus A.H.J.
et al
Vereenigde Octrooibureaux Nieuwe Parklaan
107
NL-2587 BP 's-Gravenhage(NL)**

(54) Microcomputer controlled repertory dialer.

(57) Telephone numbers and names or other associated data are stored in the memory of a microcomputer system programmed to control a repertory dialer. In response to keyboard entry of a name, the name and its associated telephone number stored in memory are displayed, and the telephone number may be automatically dialed. Headings, such as "Monday calls," are stored in the memory alphabetically and associated names and telephone numbers may be grouped under each heading. A number of "special" telephone numbers are also stored in memory to be accessed directly and dialed in response to a "special" key on the keyboard. The particular one of the special telephone numbers directly accessed by that key is keyboard-alterable using software selection data. Editing and parity checking of keyboard entered data assist the user in developing a directory for storage in the memory. The contents of the memory can be transferred to another like repertory dialer or compatible terminal or other auxiliary unit through an external data port, by which the memory can also be loaded from a remote source. The dialer includes additional novel circuitry to provide automatic timing of calls, concatenation of telephone numbers such as for discount or alternative long distance service and software controlled time of day display. Dialer operation is customized by each user via the keyboard during a setup mode of operation.

*FIG. 1*

## Microcomputer Controlled Repertory Dialer.

This invention relates to repertory dialers, and more particularly, to microprocessor controlled repertory dialers having telephone numbers and associated data stored in a keyboard addressable memory.

Auto-dialers, such as the ones described in U.S. Patent No. 4,232,200 to Hestad et al. and U.S. Patent No. 4,178,487 to Lake et al., comprise a keyboard having a number of keys, each one associated with a unique name and corresponding telephone number. To dial a telephone number corresponding to a particular name, the key associated with that name is depressed, and the corresponding telephone number is automatically dialed. This type of dialer does not contain a stored directory of names and numbers.

U.S. patent No. 4,503,291 to von Holten et al., however, discloses a microprocessor controlled repertory dialer wherein telephone numbers and associated names stored in memory are addressable via a keyboard. A prestored telephone number is obtained by a user by keyboard entering at least a portion of a name. If a match occurs between the keyboard entered name and a name stored in memory, the stored name and associated telephone number are displayed and, optionally, the telephone number is dialed.

Repertory dialers of the above type now are available which provide in an addressable directory unit a "special" key having associated with it a single telephone number, such as an emergency number or a number frequently called by the user. The "special" number may be changed at the keyboard, but only a single telephone number is capable of being associated with the "special" key at a time. One object of the invention, therefore, is to provide a repertory dialer of the type described, wherein a number of telephone numbers are selectively read by a single "special" key for automatic dialing.

Directory-type repertory dialers of a type to which the invention is directed store in some cases over 400 names and associated telephone numbers. To transfer that data from one repertory dialer to another, the data must be keyboard-entered into the second dialer as the data are displayed successively from the first. It would be desirable to provide a system wherein the data stored in one dialer can be transferred automatically to another. It is accordingly another object of the invention to provide a directory-type repertory dialer, wherein names and telephone numbers stored in the memory of one of the dialers can be transferred automatically to the memory of another.

Prior directory-type direct dialers of which we are aware further are difficult to load manually with data and tend to be prone to error because there is no provision for convenient keyboard editing of input data and no error checking. An additional object of the invention thus is to provide a repertory dialer having a stored directory with convenient editing and with error detection, to simplify and expedite data entry, and to minimize the likelihood of occurrences of errors.

Another deficiency in prior art repertory dialers of which we are aware is in lack of customization; there is no provision to program operation of the dialer, via the keyboard, to sufficiently accommodate the requirements of said user. An additional object of the invention thus is to provide keyboard-controlled customization in a repertory dialer having a stored directory.

A directory-type repertory dialer, in accordance with the invention, comprises a telephone dialer controlled by a microcomputer for providing dialing signals to a telephone circuit. A keyboard provides for manual entry of telephone numbers, names and other associated data, and control signals to the microcomputer. Names and telephone numbers are stored in a memory as a "directory", and the names or other entry information are keyboard-searchable by establishing a match between keyboard-entered names and stored names, or by scrolling through the directory until an intended name is reached. The directory is formatted alphabetically by name, and additional entries may be made under each name as a "heading". The name and telephone number are stored in memory as one block which is displayable as a block on the screen. In addition to the stored directory, a number of "special" telephone numbers can be stored in memory to be selected by alterable software selection controlled by a setup mode of the dialer. Assuming that the selection process selects a particular one of a plurality of "special" telephone numbers, the dialer automatically dials that telephone number each time the "special" key is operated. To cause the "special" key to dial a different one of the "special" numbers, the selection is changed via the keyboard. In a discount mode for long-distance dialing, the "special" key controls the dialer to dial the access number of a long-distance service stored as a "special" entry. The destination number obtained from the directory, with any "1" prefix stripped, is concatenated with the access number.

In accordance with another aspect of the invention, the microcomputer is programmed with editing and error checking routines to simplify and expedite data entry by the user. The keyboard includes controls operative to scroll up and down through the directory to search for blocks of name-telephone number data for viewing, editing or dialing.

The directory stored in memory can be downloaded via a connector provided on the dialer housing to another dialer or other auxiliary unit. The memory can also be uploaded from an external source via the connector.

Telephone interface circuitry detects on-hook and off-hook conditions of a telephone to which the dialer is connected. A call duration timer in the dialer is responsive to the interface circuitry to time calls automatically as a function of the hook condition of the telephone.

Operating characteristics of the dialer are customized by each user via the keyboard through a "setup" mode of operation in accordance with a further aspect of the invention. Screen prompting assists the user during setup.

Still other objects and advantages of the present invention will become readily apparent to those skiled in this art from the following detailed description, wherein we have shown and described only the preferred embodiment of the invention, simply by way of illustration of the best mode contemplated by us of carrying out our invention. As will be realized, the invention is capable of other and different embodiments, and its several details are capable of modifications in various respects, all without departing from the invention. Accordingly, the drawing and description are to be regarded as illustrative in nature, and not as restrictive.

Fig. 1 is a perspective view of a repertory dialer of the present invention;

Fig. 2 is a rear view of the repertory dialer, showing an external port for transferring data between the dialer and another like dialer or terminal;

Fig. 3 is a block diagram of hardware circuitry constituting a repertory dialer, in accordance with the principles of the invention;

Fig. 4 is a circuit diagram of a telephone interface for controlling a call duration timer incorporated in the dialer; and

Fig. 5 is a simplified diagram of software for controlling the microprocessor shown in Fig. 3.

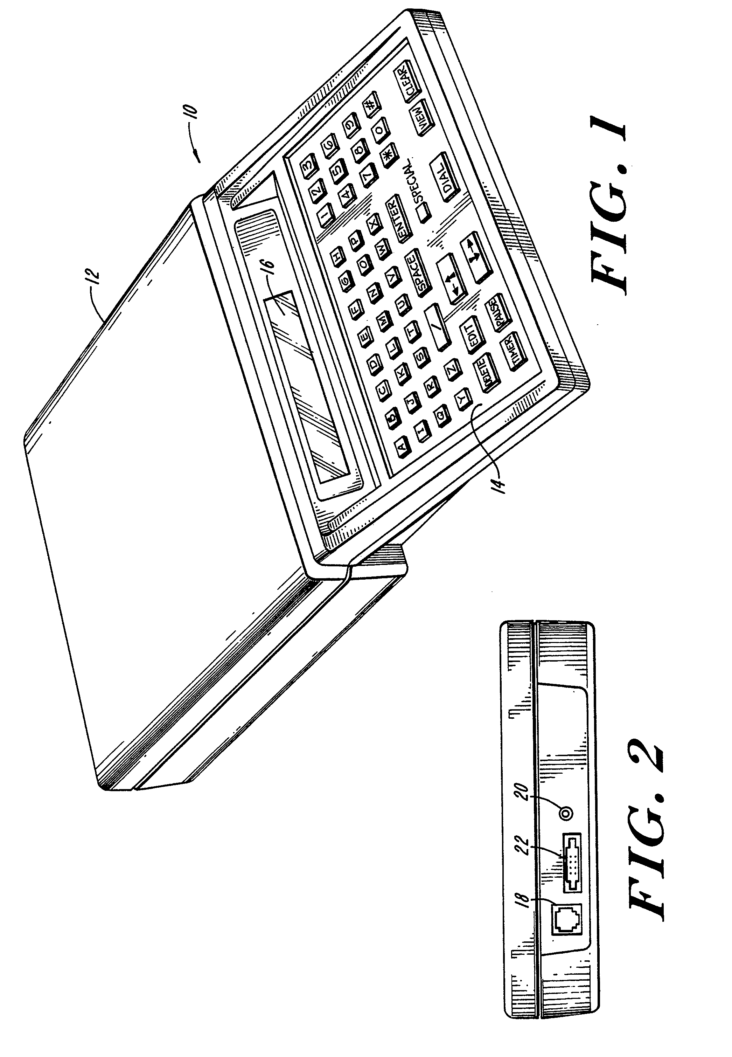

Referring to Fig. 1, a repertory dialer 10, in accordance with the invention, comprises a cabinet 12 containing electronic circuitry to be hereinafter described, to perform new repertory dialer functions. The cabinet 12 includes a keyboard 14 containing an array of alphanumeric and control keys as shown, and an alphanumeric display 16, preferably composed of a liquid crystal display (LCD) device. At the rear of the cabinet (Fig. 2) are a conventional female telephone module 18, a socket 20 for receiving a source to power the dialer, and a data port 22.

The dialer 10 is generally of a type described in U.S. Patent No. 4,503,291 of von Holten et al., assigned to the assignee of this invention, wherein a repertory dialer is controlled by microprocessor-based circuitry including random access memories for storing a relatively large number of telephone number and associated name entries. The microprocessor is programmed by firmware to access particular telephone numbers by comparing a keyboard-entered name with a stored name. If there is a match, at least a portion of the stored name and the telephone number are displayed, and the number is, if the user desires, automatically dialed. The present invention is an improvement over the von Holten et al. dialer by providing keyboard-controlled functions to enable stored data to be more easily stored and retrieved as well as to open the dialer to new applications, such as automatic discount dialing, call duration timing, memory data uploading/downloading, selectable special number dialing and setup mode customizing.

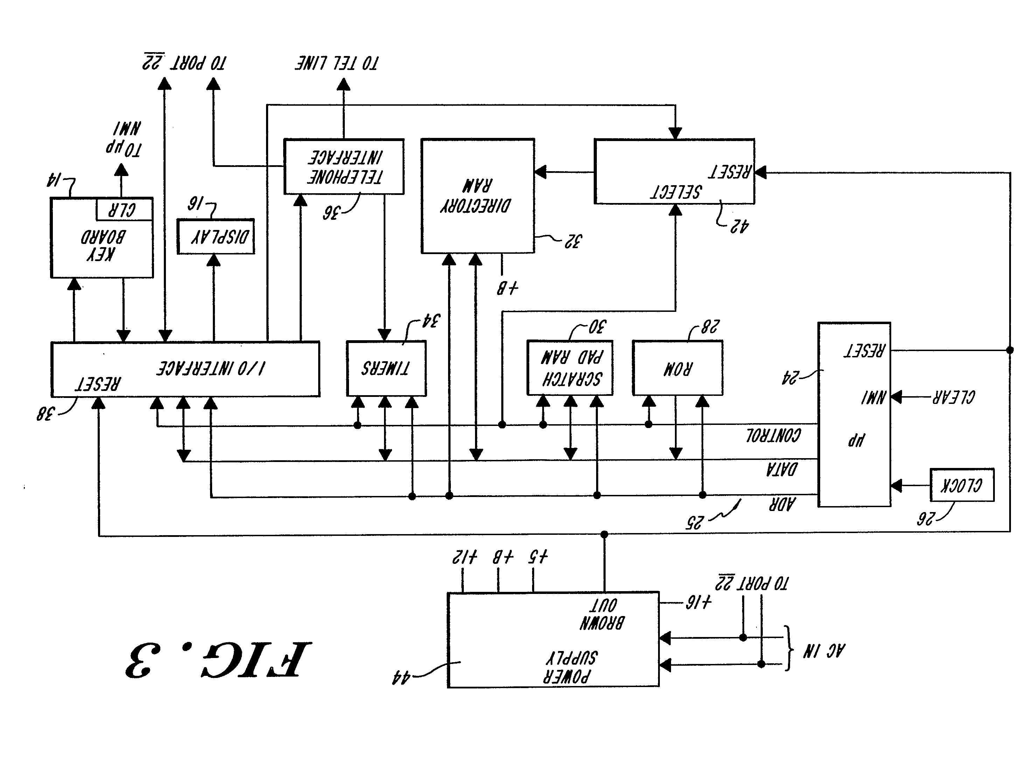

The microprocessor-based circuitry shown in Fig. 3 for controlling the operation of dialer 10 comprises a microprocessor 24, such as a Z-80 microprocessor chip manufactured by Zilog, having a timing base established by a standard, crystal controlled clock 26, and memories 28,30 and 32. The microprocessor 24 is connected on a bus 25 having 16 address lines, 8 data lines and a number of control lines. The 16 address lines provide communication among microprocessor 24 and memories 28,30, and 32 as well as timers 34, keyboard 14, display 16, and a telephone interface circuit 36. The keyboard 14 and display 16 as well as telephone interface 36 are connected to bus 25 through an input/output (I/O) interface 38 which also establishes bidirectional communication between the 8-bit data lines, and through port 22 (Fig. 2) to an external memory or other unit.

The port or connector 22 (Fig. 2) accessible via the rear panel of the housing has AC power from the primary AC input for transfer to attached auxiliary units such as speakerphone or recorder, and DC power, typically 16 volts, provided from the power supply 44 also for the powering of auxiliary units such as a Centronics or RS 232 interface. Serial data can be coupled via the connector for transfer of directory contents to auxiliary units for downloading from memory such as to another dialer, or other auxiliary unit. Serial data from a remote source can also be uploaded into the memory via the connector. The connector also provides connection to the telephone interface 36 and to the I/O interface 38. The ability to load the directory from a remote source is a particular benefit to replicate a directory from a previously stored source without requiring the re-entry of all of the data into the dialer. Similarly the presence of a stored repertoire in the dialer can be used as a data source for downloading to another dialer or other auxiliary unit. The auxiliary unit for downloading or uploading can be for example a data terminal, another dialer, a tape cassette or other data recorder. The downloading of the directory also permits an easy means for the archiving or backup of the directory data. Also, multiple users of a replicated directory can readily enter and utilize the data without re-entry of that data into multiple dialers.

The downloading or uploading of data is accomplished by providing in the microprocessor a send or receive state while in the set up mode. The set up mode is selected by the sequential actuation of the CLEAR and SPACE keys. The word "send" is typed on the keyboard and the ENTER key is depressed to cause a prompt question to appear on the display 16. A "yes" answer signified by typing a "Y" on the keyboard causes the transmission of the directory contents via the connector to an auxiliary unit connected thereto. If the word "receive" is typed on the keyboard and the ENTER key is depressed, the data from a remote source is entered via the connector to the memory for storage of the directory for dialer use. If desired, selected directory entries can be sent or received rather than the entire directory contents.

Read-only memory (ROM) 28 contains firmware programming for controlling the operation of microprocessor 24 in accordance with the principles of the invention. As shall be described below in detail, the firmware in ROM 28 controls the operation of microprocessor 24 to carry out the functions to the repertory dialer 10 necessary to store a directory of names and associated telephone number, selectively access particular names and telephone numbers via keyboard 14 and automatically dial the numbers.

Names of other data and associated telephone numbers are stored in RAM 32, constituting a directory, capable of retaining a large number of entries which typically have the format " name/telephone number". The RAM 32 may, for example, be provided as four 2K x 8-bit CMOS RAM chips, such as a conventional-type 6116 integrated circuit, in parallel and together constituting an 8-kilobyte memory capable of storing over 400 entries.

To provide protection of the contents of the directory memory 32, a voltage responsive select circuit 42 maintains the directory normally disabled. The directory memory 32 is enabled by microprocessor 24 just prior to read and write operations, and is disabled at all other times by the microprocessor or automatically by the power supply 44 in response to deregulation of the processor power line, such as might occur during a brown-out condition on the commercial power lines. To further protect the contents of the directory memory 32, the memory is battery-backed by a battery supply +B provided in the power supply 44. Thus, when the dialer is deenergized intentionally for transport, or unintentionally (e.g. power failure), the directory contents are retained. A trickle charging circuit (not shown) maintains the battery within power supply 44 fully charged.

RAM 30 on bus 25 is an additional memory, termed a "scratch pad" memory, for temporary storage of data. The RAM 30, which may be provided by an additional 6116-type random access memory chip, contains stack and other temporary data requried by conventional microprocessor stack architecture such as is incorporated by the Z80-type microprocessor 24.

The timer circuitry 34 on bus 25, which may be a conventional Z80 CTC-type quad timer chip, provides timing bases for call duration measurement, real time clock display, dial tone detection and other time-dependent functions. Call duration measurement is made, in accordance with a novel aspect of the invention, by the telephone interface 36 which measures indirectly the off-hook and on-hook states of a telephone connected to dialer 10, through connector 18 in Fig. 2. The interface 36 "starts" the duration timer automatically when the dialer completes a dialing sequence or the telephone is placed off-hook, which ever occurs later, and "stops" the timer automatically when the telephone is placed on-hook. If the TIMER key is depressed when the dialer is off-hook, the monitored time is displayed in stop watch fashion, which will continu to run until the call is completed and the dialer detects the on-hook state. It is a feature of the dialer that the time remain stored after a telephone call until the next call is dialed, unless the time was displayed and reset by actuation of the TIMER key. This feature is especially useful for postcall viewing of the time spent on the previous call. After postcall viewing in the on-hook state, depression of the TIMER key will provide a stop watch display of elapsed time, which will continu until the TIMER key is again pressed.

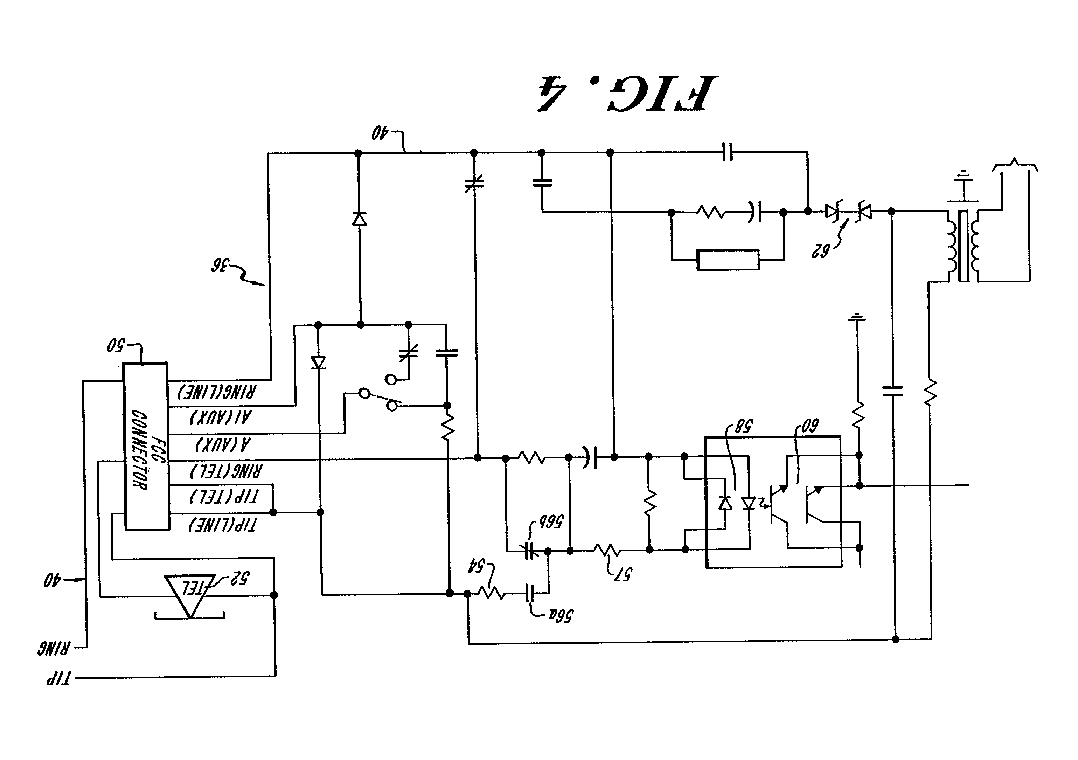

Telephone interface 36, shown in Fig. 4, together with a telephone 52, is connected, through a conventional telephone connector 50, to standard telephone line tip and ring terminals. Because portions of the interface circuit 36 of Fig. 4 are similar to telephone interface logic 14 described in the von Holten et al. patent, incorporated herein by reference, the common circuitry shall for brevity not now be described. Of particular importance, however, resistor 54 and relay contacts 56a and 56b are added. The relay contact operates in complementary pairs with one pair open when the other pair is closed and vice versa. The circuit configuration including these components is utilized after dialing and while the telephone is in use (off-hook), to determine when the telephone goes on-hook. When the telephone is returned to an on-hook condition, this condition is detected by the change in voltage across the bidirectional light emitting diodes (LEDs) 58. With relay contacts 56a closed, resistor 54 is connected from the telephone tip line, through resistor 57 and LEDs 58 to ring line 40. When the telephone is off-hook, the resulting low telephone line voltage provides insufficient drive of the LEDs 58 and insufficient light to turn on phototransistors 60. However, when the telephone goes on-hook, the increased voltage causes sufficient drive of the LEDs 58 to turn on phototransistors 60. The phototransistors signal is employed as a control signal to the microprocessor to turn off the call dufration timer 34 when the telephone goes on-hook.

Opposed Zener diodes 62, also added to the telephone interface logic circuit of von Holten et al. patent, prevent the dialer 10 from loading the telephone lines to below approximately 7 volts, by isolating the dialer and lines from each other at a low dialer voltage.

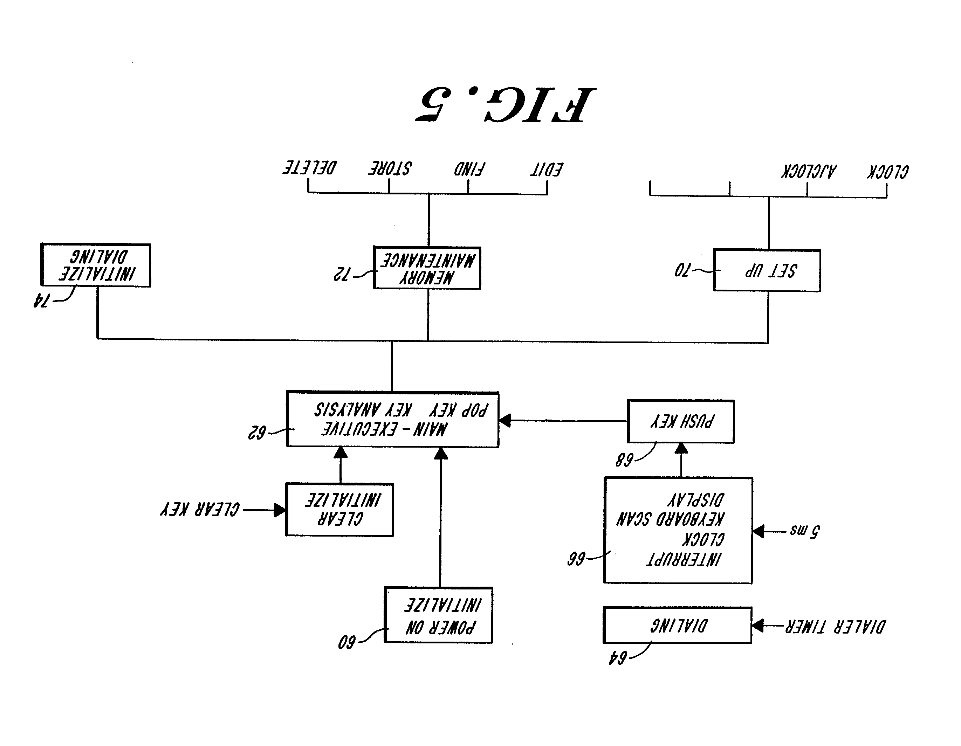

The firmware stored in ROM 28 for controlling the microprocessor 24 is set forth in detail in assembly code in Appendix A, configured as shown in Fig. 5. A power-on initialization routine 60 communicates with a main executive routine 62. Also in communication with the main executive routine 62 are a dialer routine 64 for dialing telephone numbers, including establishing via timers 34 (Fig. 3) the proper dialing durations, and "housekeeping routines" 66 for scanning the keyboard 14, controlling the display 16 and real time clock to be displayed in 16, and establishing proper interrupts. To identify the particular key depressed on keyboard 14, the firmware in ROM 28 controls microcompressor 24 to scan keyboard 14 through interface 38, which may be a conventional programmable interface adapter (PIA), by sending out sequential signals on various key row lines (not shown) and detecting signals on specific column lines (not shown). Detection of a signal emitted on a particular column line by a particular row lines identifies closure of a single keyboard key switch identified by table look-up in the firmware. The keys of keyboard 14 identified as being depressed are converted to corresponding numerical values and "pushed" into the stack of RAM 30 at routine 68. The key numbers are "popped" from the stack and analyzed in the main executive program 62.

The main executive program calls a set-up routine 70, wherein routine 70, wherein as shall be described, the dialer 10 is customized to user's requirements, and calibrated. In a memory maintenance routine 72, called by the main executive routine 60, memory management functions such as EDIT,FIND, STORE, DELETE, etc., are carried out. Finally, in an initialize dialing routine 74, telephone numbers stored in memory are dialed onto the telephone lines, controlled by the dialer timing established in routine 64.

Referring to Fig. 1, the CLEAR key of keyboard 14 cancels any operation of the dialer and places the dialer "on-hook", that is, disconnects the dialer from the telephone lines. The CLEAR key is hardwired to the nonmaskable interrupt (NMI) input of the microprocessor (Fig. 3). This is the only key that is not scanned by the microprocessor, and functions as a reset key to clear whatever operation was in process when the key was pressed.

A keyboard entry is deleted by the user from display 16 and from directory memory 32 by operating the DELETE (DEL) key. These are display prompted to confirm that an entry in fact is to be deleted; the user responds by operating the "Y" key. The VIEW key is operative when actuated to display the last directory name looked up, whether dialed or not. This feature is useful for example to recall the last name in a chain of calls being made.

The slash key "/" defines the start of the telephone number field and the slash symbol "/" is displayed for viewing by a user. Data entries at keyboard 14 to be stored in directory 32 are typically in the form "name/telephone number"; the "/" distinguishes between the name field and telephone number field stored in the directory memory. The numbers of characters constituting the name field and number field are arbitrary and limited only by the capacity of the memory. The microprocessor 24 is programmed by the firmware in ROM 28 to recognize data following a "/" as being a telephone number and to recognize data preceding a "/" as being a name or other data. The successive entries are contiguous to each other in the memory 32, to optimize storage efficiency.

Entries made at keyboard 14 are stored alphabetically as a function of each name or other data preceding its associated telephone number. A unique type of entry, termed a "heading" entry, is an alphanumeric message, typically not accompanied by a telephone number, stored alphabetically. Indented under each heading are a number of subheading entries that are stored in memory 32 in the order of their entry. For example, the heading "Monday calls" is stored alphabetically between entries such as "Marvin/telephone number" and "Monroe/telephone number." Immediately following "Monday calls" are a number of indented subheading entries (name/telephone number) stored in their order of entry, rather than in alphabetical order.

Microprocessor 24 is programmed by firmware in ROM 28 to store entries in alphabetical order or as subheading entries, automatically, in response to keyboard control characters. The microprocessors 24 is further programmed to select, and optionally dial, particular telephone numbers by attempting to establish a "match" between a keyboard-entered name and a directory-stored name. If there is a match between at least the particular alphanumeric letters that have been keyboard-entered and the first portion of a stored name or other data, the stored entry is displayed on display 16, and can now be dialed in response to operation of the DIAL key on the keyboard. If there is no match, however, the entry is deemed not previously stored. The microprocessor in response is controlled to enter an "enter" mode to store the unique entry in directory RAM 32.

The stored directory can be accessed and displayed entry by entry, and each entry can be viewed in "ticker tape" fashion. The VIEW key causes left to right "ticker tape" scrolling of the displayed data. In the illustrated embodiment there is a 16 character display and a 128 character storage. The display therefore provides a window for viewing the data storage entry in 16 character segments. The VIEW key can be repetitively pressed for character by character shifting. After shifting of the last character to the right-most display position, depression of the VIEW key will cause the reappearance of the first character of the stored entry. If the VIEW key is held down, the characters are "ticker taped" to the end of the stored entry and the displayed characters will then stop. If the VIEW key is hit again, the first 16 characters are again displayed. The "↑" and " " keys operate in similar fashion for up or down scrolling of entries in the directory. Each actuation of either key will cause a one entry move (up or down depending on which key is used),and continuous depression of either key will cause continuous scrolling of entries, typically at a rate of 3 to 5 entries per second. The scrolling will stop at either end of the directory, and the opposite direction scroll key must be depressed to cause scrolling in the opposite direction. In the edit mode these keys are employed for left-right cursor movement within the display.

To manually dial a telephone number directly from the telephone style keypad on the dialer, the entry "telephone number", followed by operation of the DIAL key, is made by the user. The telephone number is automatically dialed and is retained in directory memory 32 as "/telephone number", to be automatically redialed in response to a subsequent operation of the DIAL key. In other words, there is no requirement for a separate "redial" key as is common in conventional automatic dialers.

The data blocks are stored alphabetically by name and numeral in the order A-Z and 0-9. The data is stored in dictionary manner and is displayed in that order. The keyboard control keys "↑" and " " permit scrolling through the dictionary. For auto dialing of a telephone number selected from the stored directory, the telephone number is selected by way of the directory name, and the DIAL key is pressed to cause dial-out of the stored number. The number dialed is stored in memory 32 as the first entry and is the number which is redialed when the DIAL key is again pressed, so long as another directory entry has not been selected. Each number dialed is stored as the initial entry in memory 32 and remains in that location until a new directory entry is dialed, or until another telephone number is manually dialed via the keyboard. Upon actuation of the DIAL key, the first 16 characters of an entry are displayed and therefore the name is visible when a call is being placed. The first 16 characters are displayed even if other characters of the field were on the display before the DIAL key was pressed.

A new telephone number can be dialed via the keyboard 14 and can then be stored in the directory by adding the associated name information and storing the block of name-telephone number data in its alphabetic location in the memory 32. This feature is useful for example in storing new telephone numbers which have been looked up or from the information operator of the telephone system.

The entry mode may be established by pressing the ENTER key or may be established automatically without need to press the ENTER key. When a name is keyed in on the keyboard 14, the detection of a new entry signifies that the enter mode is intended, and that new entry will be stored in its alphabetic location of the directory when the ENTER key is depressed. As an example, if the name "Brown" is keyed in and is found in the directory and displayed, the search mode is presumed. If, however, the name "Browne" is keyed in and not found in the directory, the enter mode is presumed, and the new name and its telephone number can be stored in the directory at the specified alphabetic loaction.

To make an antry for storage in directory RAM 32, there are thus two alternative formats:

name/telephone number ENTER

ENTER name/telephone number ENTER

If a typing mistake is made by the user while making a keyboard entry, operation of the DELETE key deletes the last character entered. Operation of the ENTER key by the user following a "name/telephone number" entry causes the entry to be transferred from scratch pad RAM 30 to directory RAM 32.

An entry in memory 32 may be edited by operating the EDIT key on keyboard 14. A cursor appears at the beginning of the telephone number portion of a stored entry, e.g. JONES/ 7 651234. The cursor is repositioned to the right or left using the two arrow keys "←" and "→" on the keyboard 14.The EDIT mode is aborted without modifying the memory by operating the CLEAR key.

In the event that a typing error appears in a stored entry, the cursor is positioned under that error, and the character is deleted by operating the DELETE key. All characters to the right of the cursor are shifted left to replace the deleted character. Characters to the left of the cursor are added, and the remaining characters are appropriately shifted, by simply keyboard adding the characters following operation of the ENTER key. The edited entry replaces the original entry, and the directory memory 32 now retains only the new edited entry.

An entry can be modified and added to the contents of the memory by the user terminating the EDIT mode by operating the EDIT key, rather than the ENTER key. Stored in memory thereafter are the original entry in addition to the new, edited entry.

The ability to edit entries stored in directory 32 of the dialer 10 provides the user with a degree of versatility not heretofore available in repertory dialers.

To minimize occurrences of errors in stored entries, each byte, or character, includes a parity bit which is detected by the firmware in ROM 28, to determine whether the byte has become altered by an electronically created error.If the error correction firmware locates a byte or character that is a name or telephone number with an incorrect parity bit, the character "?" is displayed at the position of the character error. An entry having a "?" character in the name is displayable on display 16, but "?" in the name is not processible, that is, the entry cannot be located during a directory name "search" since there will be no match between the "?" character and a keyboard-entered character. Entries containing errors can be located by using the up arrow "↑" and down arrow " " keys on keyboard 14. A telephone number having a "?" character will be inhibited by the firmware from dialing on the telephone lines. Once located on display 16, an entry having a "?" character in either the name or telephone number can be corrected in the EDIT mode, as described above.

As also described above, the "name/telephone number" entries are stored in memory 30 alphabetically via the name field independent of their chronological order of entry, e.g.:

JONES/8775663

JONES A/8776490

JONES B/4637152

SMITH/3576368

SMITH A/8645770

SMITH 3/14087765413

SMITH 4/15163585133

The second type of entry provided by firmware in ROM 28 is the heading-subheading entry described above. The heading entry is a name or other alphanumeric data, with or without a suffix "telephone number". Subheading entries, indented under the heading, are stored in their order of entry. The subheading entries are indented at the keyboard by operating successively the ENTER and SPACE keys preceding each subheader entry, e.g.:

MALOY DAN/15162333030

MONDAY CALLS

SMITH A/8645770

JONES/8775663

SMITH/3576368

MORAY JOHN/4435131

Note in the above example that "MONDAY CALLS" is a heading, and the Smith, Jones, and Smith subheading entries are indented under the heading "MONDAY CALLS." It is also noted that whereas the Maloy, Monday, and Moray entries are stored in memory 32 alphabetically, the subheading entries Smith, Jones, and Smith are stored in their order of entry.

A subheading entry is accessed for telephone dialing by keyboard-entering "MONDAY CALLS" or at least the first portion of it sufficient to establish a match with the stored heading "MONDAY CALLS".

Upon a match, "MONDAY CALLS" is displayed, and the operator indexes down the subheading list SMITH, JONES, SMITH to the desired entry using the " "key, and then operates the DIAL key.

A PAUSE key on keyboard 14, when entered as part of a telephone number, is displayed as a ">", that controls the dialer 10 to pause within a dialing sequence following the "> ", await a dial tone, and dial the remaining numbers of the sequence. This function is particularly useful in a PABX system, which requires that an initial access number be dialed to obtain an outside line. The pause can be manually terminated by the user, however, by depressing the PAUSE key on keyboard 14 when the dialer 10 is in a pause awaiting a dial tone. If a TIMEOUT mode has been enabled by the user during SETUP, to be described, the dialer 10 is controlled by firmware in ROM 28 to dial the portion of the number following the ">" after a predetermined time (e.g. four seconds), even if the dial tone is not detected. This is useful where a dial tone is available but difficult to detect, or is not available or detectable.

In accordance with another aspect of the present invention, a "SPECIAL" key accesses and automatically dials one of a group of telephone numbers indexed under the heading "SPECIAL". Typical subheading entries that are stored by the user during a SETUP mode to be described below are the access numbers of discount long distance services, such as SPRINT and SBS, and emergency or commonly dialed numbers, such as police, e.g.:

SPECIAL

SPRINT /1234444 > 987654

SB/5551234 12345

POLICE/911

The user, during SETUP, selects a particular one of the subheading entries to be dialed automatically each time the SPECIAL key is operated. Thus, to access a "SPECIAL" entry previously stored by the user, the SPECIAL key is depressed by the user. The currently selected SPECIAL entry, e.g., "SPRINT/1234444 > 987654", is dialed. This is a significant improvement over prior art repertory dialers, wherein a SPECIAL key dials only one number preselected by the user and wherein the particular number to be dialed is not keyboard-selectable from a stored directory by the user.

Different sequences of telephone numbers can be concatenated, and optionally separated to await a dial tone by the PAUSE character ">". Of particular utility, a long distance discount service access number can be concatenated with a destination telephone number, separated where appropriate by the PAUSE character. Furthermore, in accordance with an important aspect of the present invention, long distance telephone numbers may be stored in directory 32 with a "1" prefix to access AT&T long distance service. A DISCOUNT mode, however, selected by the user during SETUP, automatically strips the prefix"1" from the long distance number when a discount service is utilized.

Assume, for example, that the DISCOUNT mode is initialized by the user during SETUP, as described hereinafter. A long distance number to be dialed is presumed stored in directory 32 as SMITH/13125551234. Assume further that the access number of a discount service being used is 635-7155 and that the discount service identification code of the user is 81337. The number thus is dialed, following successive operations of the SPECIAL key and DIAL key (the DIAL key must be operated by the user before the SPECIAL number has been completely dialed) is 6357155 (PAUSE) 813373125551234.

The firmware in ROM 28 controls microprocessor 24 to operate in the "SETUP" mode, referred to above, wherein the operation of dialer 10 is customized to the requirements of each user. The SETUP mode is operative to select the particular telephone number indented under SPECIAL to be dialed in response to the SPECIAL key as well as to initialize (1) TONE dialing, (2) telephone line compatibility, (3) display clock, (4) keyboard locking, and (5) memory transfer and clear. To execute a SETUP procedure, the CLEAR key followed by the SPACE key is depressed by the user; the word SETUP is automatically displayed.

During the SETUP mode, keying in "SPECIAL" causes the currently active subheading entry under the heading ""SPECIAL" in directory RAM 32 to be displayed; this entry will be the one dialed by the dialer 10 when the SPECIAL key is operated by the user during normal operation of the unit. To change the subheading entry to be dialed by the SPECIAL key, the user indexes among the subheading entries using the "↑" and " " keys until the desired one is displayed on display 16. The displayed subheading entry is stored by the user as the selected one by operating the ENTER key. Thereafter, during normal (not SETUP) operation of the dialer 10, operation of the SPECIAL key by the user causes the newly selected subheading entry under the SPECIAL heading stored in RAM 32 to be automatically dialed.

Customization of dialing is provided by the user during SETUP by the commands DIALMODE and TONERATE. In DIALMODE, the dialer 10 is initialized to operate in pulse DIAL mode or in a tone DIAL mode. The inclusion of a number sign - (#) in a telephone number causes the dialer, when initialized as a rotary unit (pulse mode), to be temporarily changed to a tone unit for the duration of the dialing sequence including any concatenated telephone number, for special applications such as SPRINT which requires tones to be interjected during a rotary dial sequence. TONERATE changes the speed of tone dialing among three, ten and fifteen digits per second.

The telephone line compatibility setup commands are DISCOUNT, TIMEOUT, INTERLOCK, AUTOACCESS and AA DIGIT, as contained in Appendix A. The DISCOUNT command, discussed above, enables the DISCOUNT mode which suppresses the leading "1" of a long distance telephone number being dialed if concatenated. The TIMEOUT command, also discussed above, overrides a PAUSE, typically four seconds, if a dial tone is not detected, to enable the dialer to dial the remainder of the telephone number.

The INTERLOCK command controls the dialer to hang up immediately after dialing, without waiting for the user to pick up the telephone, and AUTOACCESS is used in a PBX station where all outside calls require a special digit to capture an outside line, and must wait for a second dial tone. The AUTOACCESS command eliminates the requirement of storing the digits 9 and ">" preceding each entry in directory 32; the digit 9 which in this example is the "outside line" digit for the particular PBX that is implemented is selected by the user during setup using the AADIGIT command.

The display clock setup commands are CLOCK, CLOCKMODE, and ADJTIME. The CLOCK command allows setting of the time of day clock displayed in display 16, by direct keyboard entry of numerals corresponding to the present time. The CLOCKMODE command enables the user to select between 12:00 and 24:00 clock formats. The ADJTIME command enables the user to make small adjustments to the speed of the time of day clock. The ADJTIME command solicits display prompting from the firmware in ROM 28 to enable the user to keyboard-enter 9 seconds per week corrections to the display clock, although larger corrections can be made through successive ADJTIME commands.

The LOCK COMMAND disables the dialer 10. The UNLOCK command enables the dialer in response to entry of the proper password. The PASSWORD command is used to change the password associated with the LOCK and UNLOCK commands.

The memory setup commands are ERASE, SEND and RECEIVE. ERASE clears all entries in memory 32, and generates display prompting to cause the user to confirm that a memory erase is being requested before the ERASE routine is executed. The SEND command transfers the contents of directory memory 32, in serial (or other) format, to another dialer or terminal through connector 22 - (Fig. 2). The firmware in ROM contains a programmed UART to provide the proper communication protocol. Finally, the RECEIVE command is used to receive data from the memory of another directory or other source, to be loaded into directory 32. The memory 32 must first be cleared using the ERASE command, to initialize the memory. The other dialer must be set up into the SEND mode, and as data are being received from the other dialer, the display 16 of the receiving dialer displays the prompt RECEIVING DATA. When the data transfer is complete, the display is "RECEIVE DONE".

There has thus been described a novel repertory dialer having a keyboard accessed directory sorting name and telephone number entries, controlled by a microprocessor to carry out functions not heretofore available in dialers of that type, such as entry selectable special-key dialing, setup customization of dialer operation, memory storage and error handling, screen editing, subheading entry storage and discount telephone number concatenation. In this disclosure, there is shown and described only the preferred embodiments of the invention, but, as aforementioned, it is to be understood that the invention is capable of use in various other combinations and environments and is capable of changes or modifications within the scope of the inventive concept as expressed herein.

**Claims**

1. A repertory dialer, comprising:

programmable microcomputer control means for controlling operation of said dialer;

dialing means in circuit with said programmable microcomputer control means for providing dialing signals to a telephone circuit;

keyboard input means for inputting directory listing data, i.e., search data and telephone number data, as well as control signals to said programmable microcomputer control means;

first storage means for storing variable length fields of telephone number data and associated search data entries;

second storage means storing a control program for causing said programmable microcomputer control means to:

in response to a first control signal, store said telephone number data and said associated search data entries in said first storage means; and

in response to a second input control signal and particular first input search data, access particular stored telephone number data;

said control program further causing said programmable microcomputer control means to:

in response to a third input control signal, store a plurality of "special" telephone numbers in said first storage means;

in response to a fourth input control signal, store alterable selection data associated with at least one of said numbers to select a predetermined one of said plurality of "special" telephone numbers to be accessed; and

in response to a fifth input control signal, access said first memory means to obtain said predetermined one of said "special numbers" selected by said alterable selection data.

2. The repertory dialer of claim 1, wherein said programmable microcomputer means includes:

a microprocessor;

a common bus, and

a memory interface connected to said common bus for interfacing said microprocessor to said first and second storage means.

3. The repertory dialer of claim 1, wherein said keyboard input means includes a "special" key for generating said fourth control signal.

4. The repertory dialer as recited in claim 1, including display means responsive to said keyboard input means for displaying contents of said first storage means.

5. The repertory dialer of claim 1, including means for concatenating said predetermined one of said "special" telephone numbers and said accessed particular stored telephone number data.

6. The repertory dialer of claim 5, wherein at least some of said stored telephone number data include a fixed prefix designating a long distance number, wherein said concatenating means includes means for detecting said fixed prefix and in response deleting said fixed prefix.

7. The repertory dialer of claim 1, wherein said control program means includes means for storing data in said first storage means in a first storage means in a first predetermined order, independent of order of entry of said data at said keyboard input means, and in a second predetermined order associated with said first predetermined order and dependent of said order of entry of said data.

8. The repertory dialer of claim 1, including means for transferring data between said first storage means and an external terminal means.

9. The repertory dialer of claim 8, wherein said external terminal means is another repertory dialer.

10. A repertory dialer, comprising:

programmable microcomputer control means for controlling operation of said dialer;

dialing means in circuit with said programmable microcomputer control means for providing dialing signals to a telephone circuit;

keyboard input means for inputting telephone number data, associated search data and control signals to said programmable microcomputer control means;

first storage means for storing variable length fields of telephone number data and associated search data entries; and

second storage means storing a control program for causing said microcomputer control means to:

in response to said first control signal, store first telephone number data and associated search data in a predetermined order independent of the order of entry of said first data, and second telephone number data and associated search data grouped together and associated with particular first data in order of entry of said second data.

11. A repertory dialer, comprising:

programmable microcomputer control means for controlling operation of said dialer;

dialing means in circuit with said programmable microcomputer control means for providing dialing signals to a telephone circuit;

keyboard input means for inputting telephone number data, associated search data and control signals to said programmable microcomputer control .means;

first storage means for storing variable length fields of telephone number data and associated search data entries, at least some of the telephone number data including a fixed prefix indicative of a long distance telephone number;

second storage means for storing variable length fields of "special" telephone number and associated search data entries;

first means responsive to a first input control signal for storing particular telephone number data in said first storage means; second means responsive to a second input control signal and particular input associated search data for accessing particular telephone number data stored in said first storage means;

third means operative in a "discount mode" for deleting any said fixed prefix from said accessed telephone number data; and

fourth means responsive to said third means for concatenating said accessed "special number" and accessed number data.

12. A repertory dialer, comprising:

programmable microcomputer control means for controlling operation of said dialer;

dialing means in circuit with said programmable microcomputer control means for providing dialing signals to a telephone circuit;

keyboard input means for inputting telephone number data, associated search data and control signals to said programmable microcomputer control means;

first storage means for storing variable length fields of telephone number data and associated search data entries;

second storage means storing a control program for causing said programmable microcomputer control means to:

in response to a first control signal, store said telephone number data and said associated search data entries in said first storage means; and

in response to a second input control signal and particular first input search data; access particular stored telephone number data; means controlled by said keyboard means for displaying contents of said first storage means, and

means responsive to said keyboard in an edit mode for editing contents of said first storage means, wherein

each byte of data stored in said first storage means includes a parity bit, and said control program further includes error detection means for testing said parity bit, and means responsive to a parity error for displaying an error character, and

said parity error responsive means includes means for displaying entries having error characters but inhibiting said dialing means.

13. The repertory dialer of claim 12, including means for updating contents of said first storage means with edited contents by terminating the edit mode.

14. A repertory dialer, comprising:

programmable microcomputer control means for controlling operation of said dialer;

dialing means in circuit with said programmable microcomputer control means for providing dialing signals to a telephone circuit;

keyboard input means for inputting telephone number data, associated search data and control signals to said programmable microcomputer control means;

first storage means for storing variable length fields of telephone number data and associated search data entries;

second storage means storing a control program for causing said programmable microcomputer control means to:

in response to a first control signal, stored said telephone number data and said associated search data entries in said first storage means; and

in response to a second input control signal and particular first input search data, access particular stored telephone number data;

display means for displaying contents of said first storage means;

said control program further causing said programmable microcomputer control means to operate in a setup mode controlling said display means to display prompt messages, monitor the keyboard input means and in response initialize variables stored in said first storage means;

said control program additionally causing said programmable microcomputer control means to:

in response to a third input control signal, stored a plurality of "special" telephone numbers in said first storage means;

in response to a fourth input control signal, store alterable selection data associated with at least one of said numbers to select a predetermined one of said plurality of "special" telephone numbers to be accessed;

in response to a fifth input control signal, access said first memory means to obtain said predetermined one of said "special numbers" selected by said alterable selection data;

said control program further causing said programmable microcomputer control means in the setup mode to select said alterable selection data.

15. A repertory dialer, comprising:

programmable microcomputer control means for controlling operation of said dialer;

dialing means in circuit with said programmable microcomputer control means for providing dialing signals to a telephone circuit;

keyboard input means for inputting directory listing data, i.e. search data, telephone number data, and control characters to said programmable microcomputer control means;

first storage means for storing variable length telephone number data and/or search data entries, the character length of each of said telephone number data and search data in each entry being arbitrary and limited by only the capacity of said first storage means;

second storage means storing a control program for causing said programmable microcomputer control means to:

in response to a first control signal, store said telephone number data and said associated search data entries in said first storage means; and

in response to a second input control signal and particular first input search data, access particular stored telephone number data.

16. The repertory dialer of claim 15, including display means responsive to said keyboard input means for displaying contents of said first storage means.

17. The repertory dialer of claim 15, wherein said control program means includes means for storing data in said first storage means in a first predetermined order, independent of order of entry of said data at said keyboard input means, and in a second predetermined order associated with said first predetermined order and dependent of said order of entry of said data.

18. The repertory dialer of claim 15, including means for transferring data between said first storage means and an external terminal means.

19. The repertory dialer of claim 18, wherein said external terminal means is another repertory dialer.

20. A repertory dialer, comprising:

programmable microcomputer control means for controlling operation of said dialer;

dialing means in circuit with said programmable microcomputer control means for providing dialing signals to a telephone circuit;

keyboard input means for inputting telephone number data, associated search data and control signals to said programmable microcomputer control means;

first storage means for storing variable length fields of telephone number data, search data or both associated as an entry;

second storage means storing a control program for causing said programmable microcomputer control means to:

in response to a first control signal, store an entry of said telephone number data, said search data or both in said first storage means; and

in response to a second input control signal and particular first input search data, access a particular stored entry;

display means for displaying contents of said first storage means;

said control program further causing said programmable microcomputer control means to operate in a "setup" mode controlling said display means to display prompt messages, monitor the keyboard input means and, in response, assign values to variables stored in said second storage means to configure said dialer.

21. A repertory dialer, comprising:

programmable microcomputer control means for controlling operation of said dialer;

dialing means in circuit with said programmable microcomputer control control means for providing dialing signals to a telephone circuit;

keyboard input means for inputting telephone number data, search data and control signals to said programmable microcomputer control means;

first storage means for storing variable length fields of telephone number data, search data or both associated as an entry; and

second storage means storing a control program for causing said microcomputer control means to:

in response to said first control signal, store

first search data in a predetermined order independent of the order of entry thereof, and

second search data indexed under particular first search data, the

second search data stored in the order of entry thereof.

22. A repertory dialer, comprising:

programmable microcomputer control means for controlling operation of said dialer;

dialing means in circuit with said programmable microcomputer control means for providing dialing signals to a telephone circuit;

keyboard input means for inputting telephone number data, associated search data and control signals to said programmable microcomputer control means;

first storage means for storing variable length fields of first telephone number data, at least some of the first telephone number data including a prefix indicative of a long distance telephone number;

means for receiving variable length fields of second telephone number data;

first means responsive to a first input control signal for accessing particular first telephone number data stored in said first storage means;

second means operative in a "discount mode" for deleting any said fixed prefix from said accessed second telephone number data; and

third means responsive to said second means for concatenating said accessed first telephone number data and said second telephone number data.

23. The repertory dialer of claim 15 including:

means for displaying any name and associated telephone number by scrolling through the directory of the first storage means; and

means for displaying the stored contents of each character of each data entry of the directory.

24. The repertory dialer of claim 18 wherein the means for transferring data includes:

means for entering the directory into the first storage means from a remote source; and

means for transferring the directory stored in said first storage means to an auxiliary unit.

25. The repertory dialer of claim 15 wherein the keyboard input means includes:

means for keying in data from the keyboard, the data being changeable via the keyboard before storage; and

after data has been stored, means for establishing an edit mode to recall and change any stored data entry.

26. The repertory dialer of claim 15 including:

a clear key hardwired to the microcomputer control means and operative upon actuation to reset the dialer and clear whatever operation was in process when the key was actuated.

27. The repertory dialer of claim 15 wherein the keyboard input means includes:

a control key operative to define the subsequent field as a telephone number field; and

means for displaying a control symbol upon actuation of that control key.

28. The repertory dialer of claim 15 wherein the keyboard input means includes:

a view key operative upon actuation to display the last directory name looked up, whether dialed out or not.

29. The repertory dialer of claim 15 wherein the keyboard input means includes:

a dial key operative upon actuation to display the name associated with the call being placed.

30. The repertory dialer of claim 15 wherein the programmable microcomputer control means includes:

means operative upon detection of a new entry entered via the keyboard to establish an entry mode for storage of the new entry in its alphabetic location of the directory of the first storage means.

31. The repertory dialer of claim 15 wherein the programmable microcomputer means includes:

timing means operative to time each telephone call and to retain the monitored time in memory for the last call made;

the display means being operative to display the stored time information upon command by the keyboard input means.

32. A repertory dialer comprising:

a programmable microcomputer means for controlling operation of the dialer and having a random access memory;

dialing means in circuit with the programmable microcomputer means for providing dialing signals to a telephone circuit;

keyboard input means for inputting name and telephone number data in the random access memory of the microcomputer means to establish a directory of alphabetized names and associated telephone numbers;

display means for displaying any name and associated telephone number stored in the directory of the memory; and

wherein the keyboard input means includes:

means for scrolling through each entry of the directory for display of the name and associated telephone number of each entry;

means for scrolling through each character of each entry for display of the character of each entry of the directory;

a data port operative to provide connection to an auxiliary unit for transfer of the directory of the memory from the dialer to the auxiliary unit and for the loading of the memory with directory data from an auxiliary unit.

33. The repertory dialer of claim 32 wherein the data port includes connector terminals providing power to an auxiliary unit connected thereto.

34. The repertory dialer of claim 32 wherein the programmable microcomputer means includes:

timing means operative to time each telephone call and to retain the monitored time in memory for the last call made;

the display means being operative to display the stored time information upon command by the keyboard input means.

35. The repertory dialer of claim 32, wherein the keyboard input means includes a dial key operative upon single actuation to dial a selected call, and operative upon repeated actuation to redial a previously made but uncompleted call.

FIG. 1

FIG. 2

FIG. 3

**FIG. 4**

**FIG. 5**

DIALER TIMER → DIALING `64`

5 ms → INTERRUPT CLOCK KEYBOARD SCAN DISPLAY `66`

PUSH KEY `68`

POWER ON INITIALIZE `60`

CLEAR INITIALIZE ← CLEAR KEY

MAIN - EXECUTIVE POP KEY KEY ANALYSIS `62`

SET UP `70`

MEMORY MAINTENANCE `72`

INITIALIZE DIALING `74`

CLOCK    AJCLOCK

EDIT    FIND    STORE    DELETE

0 206 391